# EUROPÄISCHE PATENTSCHRIFT

(11) **EP 3 172 155 B1**
(45) Veröffentlichungstag und Bekanntmachung des Hinweises auf die Patenterteilung: **30.09.2020**
(21) Anmeldenummer: 15767417.7
(22) Anmeldetag: 07.07.2015
(51) Int. Cl.: B65G 47/64, B65G 47/53

(54) **PRODUKTAUSTRAGEEINHEIT**
PRODUCT DISTRIBUTION UNIT
UNITÉ DE DISTRIBUTION DE PRODUITS

(30) Priorität: 24.07.2014 CH 138142014
(43) Veröffentlichungstag der Anmeldung: 31.05.2017
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/EP2015/065443
(87) Internationale Veröffentlichungsnummer: WO 2016/012229

(56) Entgegenhaltungen:
- EP-A1- 0 558 123
- EP-A1- 0 666 230
- EP-A2- 0 786 425
- WO-A1-2013/116801
- GB-A- 2 119 337

## Beschreibung

Die Erfindung betrifft eine Produktaustrageeinheit gemäss dem Oberbegriff des Anspruchs 1 und ein Verfahren zur Produktaustragung gemäss dem Oberbegriff des Anspruchs 8.

Der Begriff Produktaustragung steht im Rahmen dieser Anmeldung für die Entnahme von Produkten von einer Hauptfördereinrichtung und Übergabe der entnommenen Produkte auf eine in der Regel quer zur Hauptförderrichtung verlaufende Austragsfördereinrichtung. Eine Produktaustrageeinheit ist somit eine Einheit, welche die Produktaustragung ermöglicht, unterstützt, verbessert, vereinfacht etc. Die Fördereinrichtungen sind üblicherweise Bänder, mit denen die Produkte, insbesondere lagestabile Stückgüter, gefördert und gehandhabt werden.

Ein typischer Einsatzbereich für solche Einrichtungen ist die Produktion und Verpackung von Süsswaren, wie z. B. Schokoladetafeln und -riegel, Biscuits, Getreideriegel, Cupcakes, Muffins, Kuchen, Gebäck aller Art etc. Diese zumeist in Reihen produzierten Produkte müssen auf kurzem Weg in die Verpackungsmaschine gelangen. So ergibt sich eine Anordnung, in der die Produktreihen auf einem breiten Hauptband (Prozessband) beispielsweise von der Produktion ankommen, sodann mit einer Produktaustrageeinheit aus dem auf dem Hauptband geförderten Fluss entnommen werden und schliesslich auf einem quer zum Hauptband verlaufenden Austrageband einer Verpackungsmaschine zugeführt werden. Es können entlang eines Hauptbands so viele Produktaustrageeinheiten und Austragebänder angeordnet werden, wie nötig sind, damit die notwendige Anzahl Verpackungsmaschinen die produzierte Gesamtleistung an Produkten verpacken kann. Das Hauptband besteht in der Regel nicht aus einem durchgehenden Band, sondern aus mehreren hintereinander angeordneten Bändern, von denen einige als Weichenbänder mit absenkbarer Bandnase zum Ausleiten von Produkten aus dem Produktfluss versehen sind.

Man definiert grundsätzlich zwei Arten der Produktaustragung, nämlich die direkte Austragung und die indirekte Austragung. Bei der direkten Austragung, werden die auszutragenden Produktreihen immer direkt auf das Austrageband beschickt und zwar immer dann wenn letzteres über die benötigte Länge leer ist. So kann, abhängig von der Verpackungsleistung, entweder jede aufeinanderfolgende Reihe auf dem Hauptband ausgetragen werden, oder jede zweite, jede dritte usw. Es ist also systematisch nur möglich, eine ganzzahlig teilbare Proportion aus dem Fluss auszutragen.

Die grundsätzlich andere Art der Produktaustragung ist die indirekte Austragung der Produktreihen aus dem Produktfluss. Hierbei gelangen die Produktreihen zuerst auf einen Pufferplatz, bevor sie auf das Austrageband beschickt werden. Das hat den Vorteil, dass mehr als eine Reihe in der Produktaustrageeinheit gleichzeitig gehandhabt werden können. Somit ist es möglich, dass während des Ausfahrens einer Reihe auf dem Austrageband eine weitere Reihe aus dem Fluss entnommen werden kann und vorgepuffert wird bis das Austrageband frei ist und mit eben dieser vorgepufferten Reihe beschickt werden kann. Diese indirekte Beschickung bietet also den systematischen Vorteil, dass eine beliebige Proportion an Reihen aus dem Fluss entnommen und auf die Verpackungsmaschine beschickt werden kann. Beispielsweise können zwei aufeinanderfolgende Reihen aus dem Fluss entnommen werden und dies auch alternierend. Dadurch muss die Verpackungsgeschwindigkeit nicht immer ein ganzzahliger Teil der Produktionsgeschwindigkeit sein, sondern ist unabhängig von der Flussgeschwindigkeit und somit variierbar.

Bei der erfindungsgemässen Produktaustrageeinheit handelt es sich um eine indirekte Austragung. In dieser Einheit ist die erwähnte Puffermöglichkeit einer oder auch mehrerer Produktreihen integriert.

Neben dieser Unterscheidung zwischen direkter und indirekter Austragung gibt es eine weitere Unterscheidung hinsichtlich der Art, wie die Produkte von einem Band auf das nächste Band übergeben werden. Das sog. Aufschiessen bezeichnet eine Produktübergabe, bei der die mit einer definierten Geschwindigkeit zum Übergabebereich herangeführten Produkte infolge ihrer Trägheit über die Nase des heranführenden Bands hinaus "schiessen" und so auf dem nachfolgenden Band platziert werden. Für diese Art der Beschickung eignen sich solide Produkte mit fester Konsistenz, in der Hauptsache Schokoladetafeln, Riegel und gebackene harte Biscuits. Demgegenüber bezeichnet das sog. Ablegen eine Produktübergabe, bei der die Nase des Bands mit der seiner Fördergeschwindigkeit entgegengesetzten Geschwindigkeit zurückgezogen wird, so dass ein schonendes Ablegen des Produkts erfolgt. Diese Produktübergabe eignet sich insbesondere für Produkte, die eine weiche Konsistenz haben, nicht staubar sind und eigentlich nur gefördert werden können.

Schliesslich gibt es daneben noch eine weitere Art der Produktübergabe, bei der die Produkte mittels eines Schiebers oder dergl. von einem Band oder von einer anderen Form eines Puffers auf das nachgeordnete Band geschoben werden. Diese Art der Produktübergabe ist in mehrfacher Hinsicht mangelhaft und für einige Produktarten ungeeignet.

Im Stand der Technik sind sowohl direkte als auch indirekte Austrageeinrichtungen bekannt. Bei den bekannten indirekten Einrichtungen befindet sich der Pufferplatz meist auf einer Platte, auf der die Produktreihen vom Hauptband abgelegt werden und von der sie nachfolgend, wie bereits erwähnt, auf das Austrageband geschoben werden. Es sind auch Einrichtungen bekannt, bei denen der Pufferplatz durch ein parallel zur Hauptförderrichtung laufendes, zusätzliches Band gebildet wird.

Aus EP 0 666 230 ist beispielsweise eine Einrichtung bekannt mit einem unter dem Hauptförderband angeordneten Übergabeband 13, das aber nicht verschiebbar, sondern längenverstellbar ist. Dies ist im Gegensatz zur Ansicht der Prüfungsstelle ein prinzipieller, vom einschlägigen Fachmann auch so gesehener Unterschied. Längenverstellbare Bänder werden in der Fachsprache als sog. Pullnose-Bänder bezeichnet, weil bei diesen Bändern die Bandnase zurückziehbar ist. Bei dieser Verschiebebewegung der Bandnase wird der mit einer bestimmten Geschwindigkeit laufende Fördergurt mechanisch belastet und damit zusätzlichen Kräften ausgesetzt. EP 0 786 425 A2 offenbart eine Produktaustrageeinheit gemäß dem Oberbegriff des Anspruchs 1.

Die bekannten Einrichtungen sind nicht an alle derzeit bestehenden Anforderungen bezüglich der Produkthandhabung anpassbar. Der Erfindung liegt daher die Aufgabe zugrunde, eine Produktaustrageeinheit vorzuschlagen, deren Flexibilität den gestellten Anforderungen gewachsen ist.

Erfindungsgemäss wird diese Aufgabe gelöst durch eine Produktaustrageeinheit mit den Merkmalen des kennzeichnenden Teils des Anspruchs 1 und durch ein Produktaustrageverfahren mit den Merkmalen des kennzeichnenden Teils des Anspruchs 8.

Im Folgenden werden anhand der beiliegenden Zeichnungen bevorzugte Ausführungsbeispiele der Erfindung beschrieben. Es zeigen in schematischer Darstellung
- Fig. 1: eine Produktaustrageeinheit mit einem Warteband in seiner Relation zu einem Hauptband und einem Austrageband,
- Fig. 2: eine Gesamtanlage mit zwei Austrageeinheiten und einem Überlaufband in a) Seitenansicht und b) Draufsicht
- Fig. 3a-f: eine Reihe von Funktionsschritten beim Aufschiessen eines Produkts,
- Fig. 4a-g: eine Reihe von Funktionsschritten beim Ablegen eines Produkts,
- Fig. 5a-h: eine Reihe von Funktionsschritten beim Ablegen eines Produkts gemäss einer weiteren Ausführungsform der Erfindung
- Fig. 6a und 6b: die Funktion der indirekten und der direkten Rückspeisung vom Überlaufband
- Fig. 7a-g: eine Reihe von Funktionsschritten der indirekten Rückspeisung vom Überlaufband,
- Fig. 8a-g: eine Reihe von Funktionsschritten der direkten Rückspeisung vom Überlaufband.

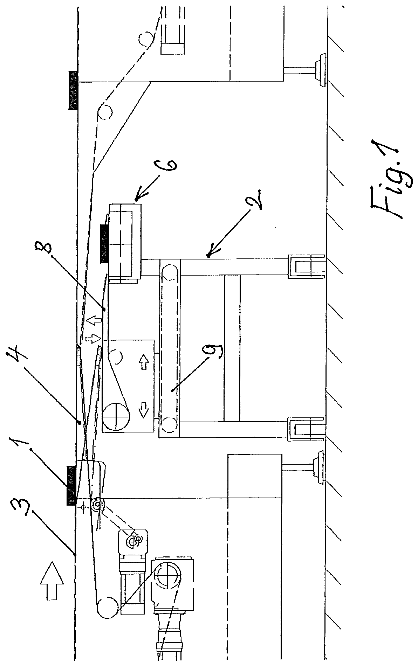

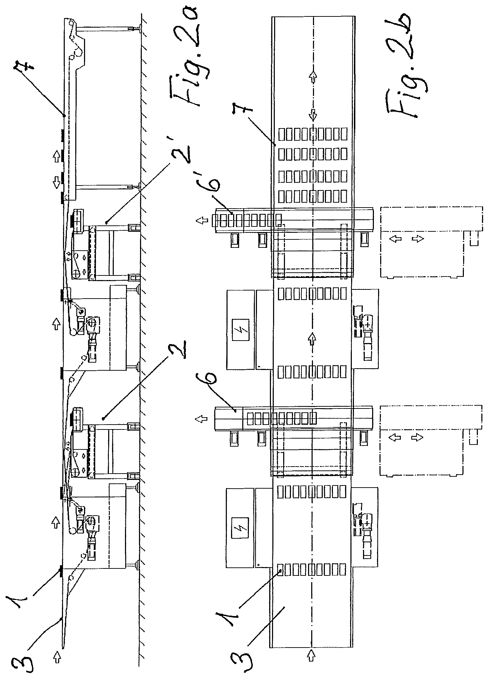

Die in Fig. 1 als Teilansicht und in Fig. 2 als Gesamtdarstellung gezeigte Anlage zur Förderung von Produkten 1 von einer Produktionseinrichtung (nicht gezeigt) zu einer oder mehreren Verpackungsmaschinen (nicht gezeigt) umfasst im wesentlichen ein Hauptband 3, welches die Produkte von der Produktion her fördert, ein quer dazu laufendes Austrageband 6, welches die Produkte zu einer Verpackungsmaschine fördert und eine als Wartebandeinheit 2, welche die Produkte vom Hauptband übernimmt und zeitlich abgekoppelt an das Austrageband übergibt. Die in den Seitenansichten als Einzelstücke erscheinenden Produkte sind, wie aus der Draufsicht der Fig. 2b ersichtlich, quer zur Förderrichtung des Hauptbands angeordnete Produktreihen. Auf dem quer zur Hauptförderrichtung laufenden Austrageband 6 sind die Produktreihen nach der Übergabe hintereinander angeordnet und gelangen als Einzelreihe zur Verpackung.

Die Wartebandeinheit 2 ist neben dem Austrageband 6 unterhalb des Hauptbands 3 angeordnet und besteht im Wesentlichen aus dem eigentlichen Warteband 8, das still stehen oder mit unterschiedlicher Geschwindigkeit angetrieben sein kann und einer Vorrichtung 9 zum horizontalen Verschieben des Bands als Ganzes in die oder gegen die Hauptförderrichtung, d.h. also quer zum Austrageband.

Die jeweiligen aus dem Fluss entnommenen Produktreihen 1 gelangen, wie nachfolgend beschrieben wird, über das Warteband auf das quer zur Hauptförderrichtung angeordnete Austrageband. Im Verlauf der Austragung können an sich bekannte Lückenschliessbänder eingefügt sein, so dass die Produkte der Verpackungsmaschine in einem kontinuierlichen lückenlosen Produktfluss geschwindigkeitssynchron zugeführt werden. Damit dies insbesondere bei höheren Leistungen überhaupt möglich wird, ergibt sich die Notwendigkeit mindestens eine Reihe vorgepuffert in der Austrageeinheit zur Verfügung zu haben, um die Verpackungsmaschine mit einer variablen Geschwindigkeit zu beschicken. Mit diesem Pufferplatz für mindestens eine Produktreihe, ist es möglich, zum einen eine beliebige Proportion an Reihen aus dem Fluss zu entnehmen und zum anderen eine Lücke im Produktfluss zu überbrücken, immer mit dem Ziel die Verpackungsmaschine mit der geforderten Geschwindigkeit lückenlos mit Produkt zu beschicken. Mit dieser Puffermöglichkeit ist es überhaupt erst möglich eine gewisse Entkoppelung vom Produktfuss auf dem Hauptband zu erreichen, und die Verpackungsmaschine optimal zu beschicken zumal der Produktfluss auf dem Hauptband diskontinuierlich und lückenbehaftet sein kann.

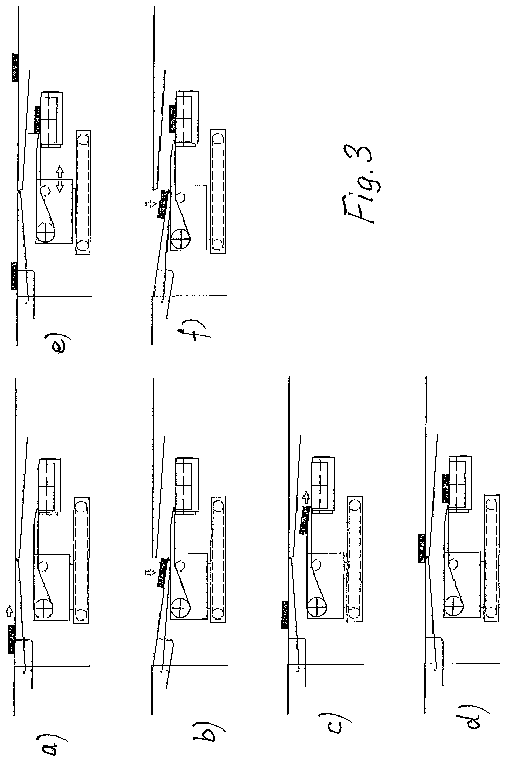

Das Hauptband 3 ist funktionell als Austrageweiche konzipiert ist. Hierbei ist dessen auslaufseitige Bandnase 4 vertikal schwenkbar ausgebildet. Mit dieser Austrageweiche kann eine Produktreihe aus dem Fluss entnommen werden und auf das untenliegende Warteband 8 gefördert werden. Das Warteband kann eine oder auch mehrere Reihen aufnehmen und vorpuffern. Die einzelnen Schritte dieses Ablaufs sind in Fig. 3 dargestellt. Eine im Produktfluss ankommende Produktreihe (a) wird durch Absenken der Nase 4 des Hauptbands auf das Warteband geführt (b), auf dessen auslaufseitige Bandnase gefördert (c) und dann auf das quer liegende Austrageband gefördert ((d). Hierfür wird die Produktreihe auf dem Warteband nur so stark beschleunigt, dass dann die Geschwindigkeit der Produktreihe ausreicht, um zentrisch auf dem Austrageband zu liegen zu kommen. Das horizontal verschiebbare Warteband kann hierfür mit dessen auslaufseitiger Bandnase relativ zum Zentrum des Austragebands produktoptimal positioniert werden, damit die Produktreihe so schonend wie möglich auf das Austrageband beschickt werden kann. Sobald die Produktreihe komplett auf dem Austrageband liegt, kann das horizontal bewegliche Warteband in Hauptförderrichtung nach vorne in Richtung Produkt bewegt werden, sodass dann mit der Bandnase des Wartebands die bereits auf dem Austrageband befindliche Produktreihe ausgerichtet wird (e). Anschliessend kann die nächste Produktreihe auf das Warteband übergeben werden (f).

Die Ausrichtfunktion ist somit aufgrund der vorgeschlagenen Anordnung prinzipiell vorhanden, jedoch nicht immer notwendig. Das hängt immer von Art und Abmessung des Produktes ab und auch von der geforderten Genauigkeit des Verpackungsprozesses. Die Horizontalbewegung des Wartebandes ist mit einem Servomotor angetrieben, sodass somit für jedes Produkt der Ausrichtvorgang individuell optimiert ausgeführt werden kann. Mit dieser Anordnung ist somit kein separater Produktausrichter nötig, weil die Ausrichtfunktion mit der Bandnase des horizontal beweglichen Wartebands ausgeführt werden kann.

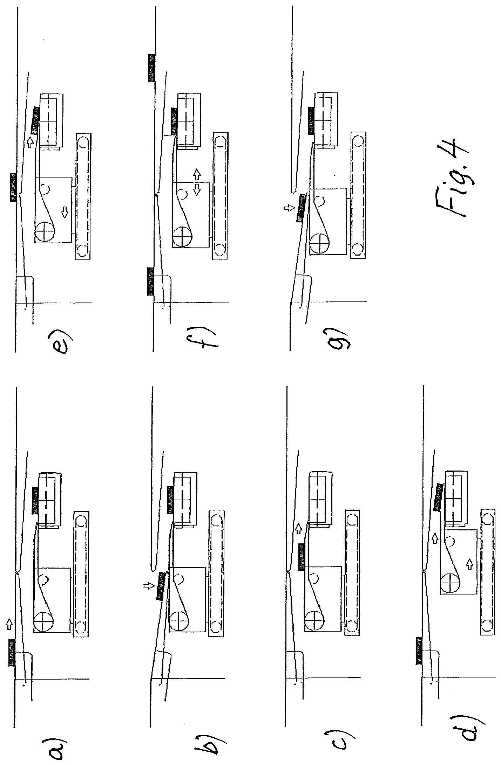

Weiterhin kann mit dieser Anordnung die andere Form der Produktaustragung, d.h. das Ablegen, ausgeführt werden. Die Produkte können mit dem horizontal verschiebbaren Band sehr schonend abgelegt werden. Die einzelnen Schritte dieser Funktion sind in Fig. 4a-g dargestellt. Eine im Produktfluss ankommende Produktreihe (a) wird durch Absenken der Nase 4 des Hauptbands auf das Warteband geführt (b), auf dessen auslaufseitige Bandnase gefördert (c), und dann auf das quer liegende Austrageband gefördert. Hierfür positioniert sich die auslaufseitige Bandnase des Wartebands soweit über das Zentrum des Austragebands, sodass sich die auszutragende Produktreihe zentrisch über dem Austrageband befindet, sobald die Produktreihe die Vorderkante des Wartebandes erreicht hat (d). Zu diesem Zeitpunkt wird das ganze Warteband genau mit der Geschwindigkeit entgegen der Hauptförderrichtung zurück bewegt (Pfeil), die der Fördergeschwindigkeit des Wartebandes entspricht (e). Das hat den Effekt, dass dann die Produktreihe zentrisch auf das Austrageband abgelegt wird, so dass das Produkt selber nur unwesentlich belastet wird. Auf diese Art und Weise ist es auch möglich, klebrige oder sonst wie empfindliche Produkte zu handhaben, die sich typischerweise nicht in der vorgängig beschriebenen Weise aufschiessen lassen. Auch nach diesem Ablegen ist eine Ausrichtung in der bereits beschriebenen Weise möglich (f), falls nötig. Anschliessend wird eine nächste Produktreihe auf das Warteband übergeben (g).

Wesentlich für diese Funktionen sind die konstruktiven Merkmale des Wartebands. Es hat eine sehr flache auslaufseitige Nase mit einer Länge von mindestens der halben Breite des Austragebands, einer Dicke von vorzugsweise ca. 30 mm und einem sehr kleinen Endumlenkungsdurchmesser. Falls nur das Aufschiessen von Produkten beabsichtigt ist, kann die auslaufseitige Nase auch kürzer sein. Damit ist es möglich die auslaufseitige flache Bandnase beliebig in ihrer relativen Position über dem Austrageband zu positionieren. Ausserdem kann die Höhendifferenz zwischen Warteband und Austrageband minimal gehalten werden. So kann die auszutragende Produktreihe optimal auf das Austrageband beschickt werden.

Sowohl der Bandantrieb, als auch die Horizontalbewegung des Wartebands sind in Abhängigkeit von gemessenen und fix eingegebenen Parametern servogesteuert. Diese Steuerung ermöglicht die beiden prinzipiell unterschiedlichen Beschickungsarten, d.h. zum einen das beschriebene Aufschiessen für solide Produkte mit hohen Leistungen und zum anderen das sanfte und produktschonende Ablegen der Reihen durch die Rückzugsmöglichkeit des Wartebands während der Austragung auf das Austrageband. Zudem ist es möglich, beide Beschickungsarten zu kombinieren bzw. zu überlagern. Dies ist wertvoll bei Produkten, die zum aufschiessen zu lang sind und sonst nur mit einem separaten Schieber ausgetragen werden könnten. Ein weiterer zentraler Vorteil ist die Ausrichtfunktion. Diese Ausrichtfunktion wird erreicht, indem die flache auslaufseitige Bandnase in Hauptförderrichtung gegen die auf dem Austrageband befindliche Produktreihe positioniert wird. Dieser Ausrichthub ist für jede Produktlänge mit dem Servoantrieb der Horizontalbewegung des Wartebandes einstellbar. Es ist also möglich, mit dieser Anordnung eine indirekte Produktaustragung mit zwei unterschiedlichen Beschickungsarten (Aufschiessen oder Ablegen) auszuführen, zu kombinieren und zudem auch noch die Ausrichtfunktion ohne separaten Schieber oder Ausrichter zu bewerkstelligen. Damit kann eine grosse Varianz in Dimension und Konsistenz lagestabiler Stückgüter ausgetragen werden.

Mit der Servosteuerung ist es möglich, für jede Produktart und Produktdimension, die über die Anlage läuft, bei der Inbetriebnahme alle zum Betrieb erforderlichen Werte zu ermitteln und in der Steuerung zu speichern. Im Betrieb der Anlage kann dann über die entsprechende Produktvorwahl der entsprechende Datensatz in der Steuerung aktiviert werden. Es sind keinerlei zusätzliche Einstellungen oder Wechselteile erforderlich und eine Produktumstellung kann ohne jeglichen Zeitverlust erfolgen. Das erhöht die Linieneffizienz.

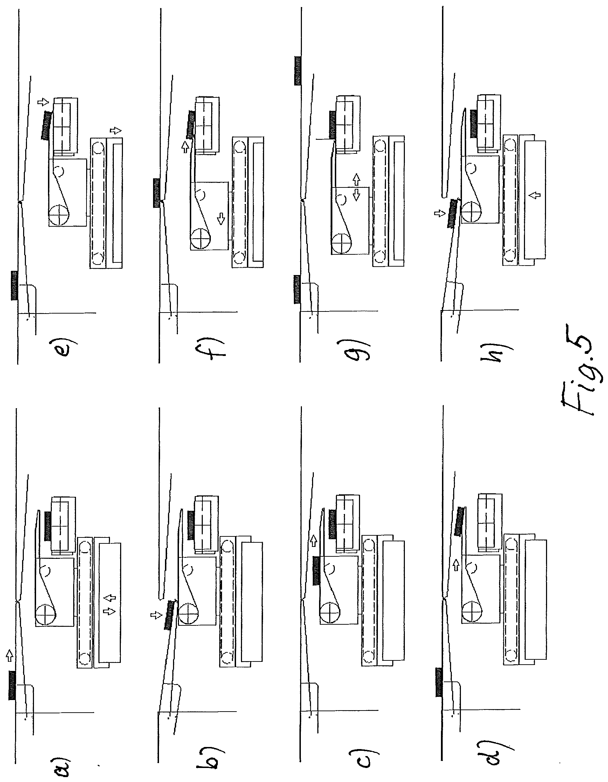

In einer weiteren Ausführungsform ist das horizontal verschiebbare Warteband zusätzlich noch höhenverstellbar. Damit ergibt sich der Vorteil, einer noch höheren Austrageleistung. Die einzelnen Funktionsschritte mit dieser Ausführungsform sind in Fig. 5a-h dargestellt. Die Bandnase des Wartebandes wird schon über dem Austrageband positioniert, während die vorher ausgetragene Produktreihe noch in Richtung Verpackungsmaschine läuft (a). Eine ankommende Produktreihe wird auf dem Warteband deponiert (b) und zum Ende der Nase gefördert, noch bevor das Austrageband frei ist (c). Sobald das Austrageband frei ist (d), wird das Warteband abgesenkt (e) und die Produktreihe in der vorher beschriebenen Weise abgelegt (f) und ggf. ausgerichtet (g). Anschliessend fährt das Warteband wieder in die erste Position, um eine weitere Produktreihe zu übernehmen (h). In der zuvor beschriebenen Anordnung, in der das Warteband nur horizontal verschiebbar ist, muss mit dem Beschickungsvorgang so lange gewartet werden, bis das Austrageband leer ist. Mit der zusätzlichen Höhenverstellung und der vorgängigen Positionierung der Bandnase über dem Austrageband gewinnt man die Zeitspanne, die benötigt wird, bis die Bandnase des Wartebandes horizontal in die richtige Stellung über dem Austrageband positioniert ist. Die Höhenverstellbarkeit der auslaufseitigen Bandnase kann auch durch eine vertikale Schwenkbewegung des Wartebands ausgeführt werden.

Erfindungsgemäß wird der Unterbau des sich unterhalb der Hauptbänder befindlichen Wartebands und des Austragebands konstruktiv so ausgebildet, dass es möglich wird, diese beiden Bänder z. B. auf Rollen quer heraus zu ziehen in Richtung Gegenseite der Verpackungsmaschinen. Dieses Herausziehen kann beispielsweise auch mit Teleskopschienen realisiert werden. Zumeist wird dieser Vorgang manuell stattfinden. Allerdings kann dies auch automatisierbar ausgeführt werden. Mit dieser seitlichen Ausziehbarkeit ist die optimale Zugänglichkeit, der unter den Hauptbändern befindlichen Mechanik für Service und Reinigungstätigkeiten gewährleistet, nicht nur nach der Produktion, sondern auch noch während der Produktion.

Die Produktaustrageeinheit besitzt einen Schaltschrank, in dem alle Aktoren und Sensoren, die für deren Betrieb nötig sind, hardwaremässig und softwaremässig verknüpft und angesteuert werden. Über eine Produktvorwahl am Display der Steuereinheit sind sämtliche über die Produktaustrageeinheit laufenden Produktsorten, ohne Umrüstzeiten, fahrbar. Hierfür wurden in einer vorgängigen Inbetriebnahme, alle Parameter für die über die Einheit laufenden unterschiedlichen Produkte, eingestellt und abgespeichert.

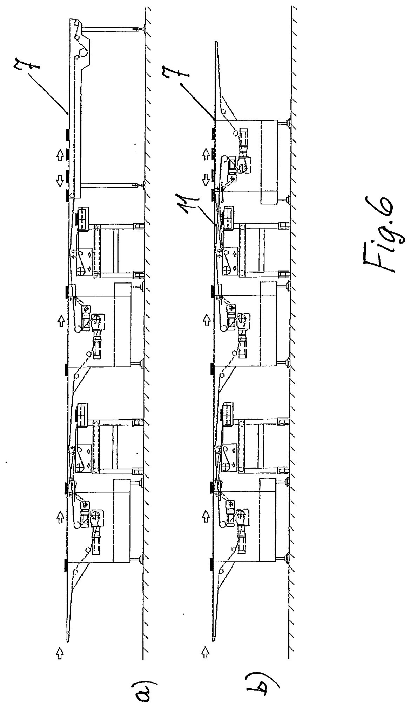

Eine weitere Anforderung an die Produktaustrageeinheit ist definiert aus dem Überlauf an Produktreihen der Linie. Alle produzierten Produktreihen, die nicht mit den hintereinander angeordneten Produktaustrageeinheiten den Verpackungsmaschinen zugeteilt werden konnten, beispielsweise weil die Verpackungsmaschinen diese auf Grund einer Störung nicht aufnehmen konnten, laufen typischerweise am Linienende auf ein Überlaufband und werden dort aufgetaktet und gepuffert. Sobald die Verpackungsmaschine am Linienende wieder verfügbar ist, besteht die Möglichkeit diese Produktreihen wieder auf diese Maschine zu beschicken. Diese Rückspeisung wird in der Fachsprache als Refeed bezeichnet. Bei diesem Refeed gibt es prinzipiell die beiden in Fig. 6 gezeigten Betriebsarten, nämlich den indirekten Refeed und den direkten Refeed.

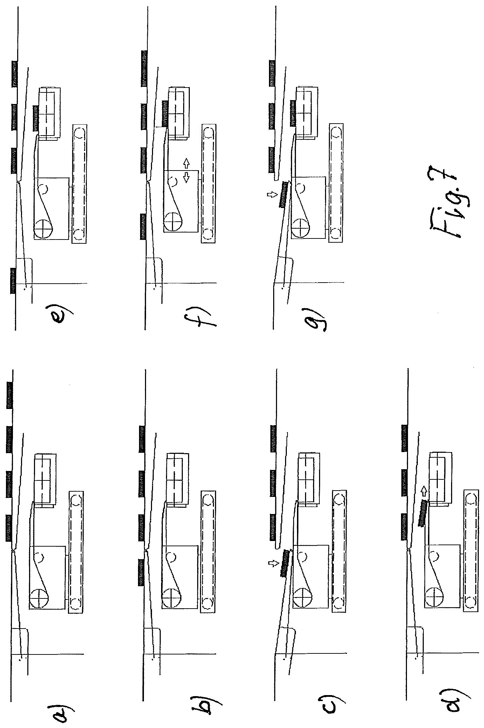

Bei dem in Fig. 6a und Fig. 7a-g gezeigten indirekten Refeed, wird der Überlauf auf ein stationäres Band geführt (Fig. 7a). Dieses Band fördert im Refeedmodus die aufgepufferten Produktreihen im Reversierbetrieb, d.h. entgegen der Hauptförderrichtung, Reihe um Reihe auf das Weichenband (Hauptband) der betreffenden Produktaustrageeinheit zurück.

Dazu muss auch das Weichenband um eine Produktlänge rückwärts fahren, um die betreffende Produktreihe aufnehmen zu können (7b). Das Weichenband beschickt nun diese Produktreihe auf das untenliegende Warteband (7c), von wo aus wiederum das Austrageband mit dieser Produktreihe beschickt wird (7d). Anschliessend kann ein normal ankommendes Produkt in der beschriebenen Weise auf das Warteband abgelegt werden (7e-g). Auf diese Weise kann der entstandene Überlauf an Produktreihen Reihe für Reihe wieder auf die letzte Verpackungsmaschine zurückgeführt werden. In dieser Zeit darf aber von vorne, d. h. von Hauptförderrichtung her kommend keine Reihe in die letzte Produktaustrageeinheit einlaufen, da sonst ein Stau entstehen kann, da ja das Weichenband der Produktaustrageeinheit bei diesem indirekten Refeedmodus rückwärts laufen können muss. Dieser indirekte Refeedmodus wird meistens am Ende der Produktion aktiviert oder bei Produktionsunterbrüchen oder wenn bei der Auslegung der Verpackungslinie die letzte Maschine als Standby-Maschine definiert wurde, die nur bei einem Stopp einer vorderen Maschine deren Produkte übernimmt.

Einer der wesentlichen Vorteile der erfindungsgemässen Einrichtung hinsichtlich der Refeed-Anforderung besteht darin, dass keinerlei zusätzliche Mechanik erforderlich ist, um die Austragefunktion und die Ausrichtfunktion zu gewährleisten. Normalerweise werden bei herkömmlichen Systemen mechanische Abschieber und Ausrichter benötigt, die oberhalb der Förderebene eingebaut werden müssen, um die Austragefunktion zu generieren. Genau diese zusätzliche Mechanik stört dann beim direkten Refeed-Modus. Bei der erfindungsgemässen Produktaustrageeinheit ist keine solche zusätzliche Mechanik vorhanden, sodass eine sehr effiziente Anordnung möglich wird, um den direkten Refeed-Modus zu generieren.

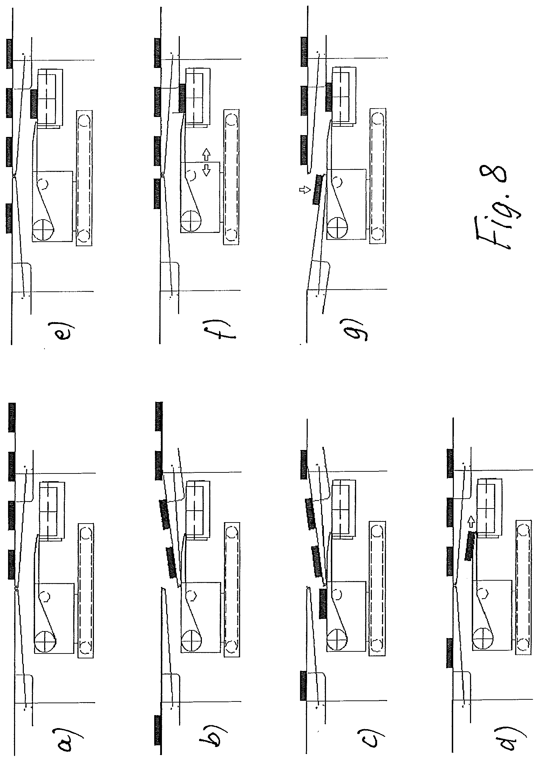

Dabei wird, wie in Fig. 6b und Fig. 8a-g gezeigt, der letzten Produktaustrageeinheit einfach ein umgekehrt angeordnetes Weichenband 11 nachgeschaltet, das die überlaufenden Produktreihen getaktet aufnimmt (Fig. 8a). Dadurch ergibt sich die Möglichkeit, eine übergelaufene Reihe in eine Lücke des ankommenden Produktflusses dynamisch zurückzuführen (8b). Dabei kann das Weichenband der betreffenden Produktaustrageeinheit in Hauptförderrichtung weiterlaufen, denn das umgekehrt angeordnete Weichenband beschickt die übergelaufene Reihe auf das untenliegende Warteband (8c). Das Warteband läuft währenddessen rückwärts, d.h. entgegen der Hauptförderrichtung, um die Reihe definiert aufzunehmen. Das umgekehrt angeordnete Weichenband bewegt seine schwenkbare Bandnase wieder nach oben, damit das Warteband die Produktreihe auf geeignete Art und Weise (wie vorgängig beschrieben) auf das Austrageband beschicken kann (8d). Bei diesem Refeedmodus kann die Produktion weiterlaufen (8eg), denn sobald eine geeignete Lücke ankommt, kann sofort wieder eine Reihe in diese Lücke zurückgespeist werden. Oft wird auch mittels vorgeschalteter dynamischer Bänder systematisch eine Lücke im Produktfluss generiert in die dann definiert eine übergelaufene Produktreihe im direkten Refeedmodus zurückgespeist werden kann.
Diese Refeed-Möglichkeiten werden immer wichtiger, denn insbesondere bei wertvollen Produkten möchte man automatisiert den Überlauf effizient zurückführen können, damit kein Verlust entsteht.

## Patentansprüche

1. Produktaustrageeinheit zur Übernahme von Produktreihen (1) aus einem auf einem Hauptband (3) in einer Hauptförderrichtung geförderten Produktionsfluss und zur Übergabe der Produktreihen auf ein quer zur Hauptförderrichtung laufendes Austrageband (6) zur Zuführung (6) zu einer Verpackungsmaschine, wobei das Hauptband eine Austragsweiche mit einer vertikal schwenkbaren auslaufseitigen Bandnase (4) aufweist, mit einer neben dem Austrageband unterhalb des Hauptbands angeordneten Wartebandeinheit (2) mit einem mittels einer Verschiebungsvorrichtung (9) zum horizontalen Verschieben als Ganzes in die oder gegen die Hauptförderrichtung verschiebbaren Warteband (8) zur Übernahme von Produktreihen vom Hauptband und der zeitlich vom Hauptband abgekoppelten Übergabe der Produktreihen auf das Austrageband (6), **dadurch gekennzeichnet, dass** die Wartebandeinheit (2) mit dem Warteband (8) und dem Austrageband (6) quer zur Hauptförderrichtung und entgegengesetzt zur Förderrichtung des Austragebands herausziehbar ist.

2. Produktaustrageeinheit nach Anspruch 1, **dadurch gekennzeichnet, dass** das Warteband (8) mit einer flachen auslaufseitigen Bandnase versehen ist, mit einer mindestens der halben Breite des Austragebands (6) entsprechenden Länge, einer Dicke von vorzugsweise ca. 30mm und einem Endumlenkungsdurchmesser vorzugsweise 10-14mm und maximal 25mm.

3. Produktaustrageeinheit nach einem der Ansprüche 1-2, **gekennzeichnet durch** Mittel zur zusätzlichen Höhenverstellung des Wartebands.

4. Produktaustrageeinheit nach einem der Ansprüche 1-3 **gekennzeichnet durch** Mittel zur beliebigen Positionierung der auslaufseitige Bandnase des Wartebandes (8) über dem Austrageband.

5. Produktaustrageeinheit nach einem der Ansprüche 1-4, **gekennzeichnet durch** Mittel zum Ausrichten einer auf das Austrageband (6) aufgebrachten Produktreihe (1) mit der verschiebbaren flachen Bandnase des Wartebands.

6. Produktaustrageeinheit nach einem der Ansprüche 1-5, **gekennzeichnet durch** Mittel zum Zurückziehen des Wartebands während des Beschickungsvorgangs entgegen der Hauptförderrichtung.

7. Produktaustrageeinheit nach einem der Ansprüche 1-6, **dadurch gekennzeichnet, dass** die Laufrichtung des verschiebbaren Wartebands (8) reversierbar ist, damit dieses in umgekehrter Richtung, entgegen der Hauptförderrichtung zugeführte Produktreihen, aufnehmen kann.

8. Produktaustrageverfahren zur Übernahme von Produktreihen aus einem auf einem Hauptband (3) geförderten Produktionsfluss und zur Zuführung zu einer Verpackungsmaschine mittels einer Produktaustrageeinheit gemäss einem der vorangehenden Ansprüche, **dadurch gekennzeichnet, dass** durch Koordination des Bandlaufs des Wartebands und der Horizontalverschiebung des Wartebands unterschiedliche Beschickungsarten generiert werden.

9. Produktaustrageverfahren nach Anspruch 8, **dadurch gekennzeichnet, dass** mit einem verschiebbaren Warteband zwei Beschickungsarten überlagert, d.h. kombiniert, werden.

10. Produktaustrageverfahren nach Anspruch 8, **dadurch gekennzeichnet, dass** ein direkter Refeedbetrieb mit zwei gegeneinander angeordneten Weichenbändern in Kombination mit einer indirekten Beschickung der Verpackungsmaschine generierbar ist.

## Claims

1. Product discharge unit for taking product rows (1) from a production flow conveyed on a main belt (3) in a main conveying direction and for transferring the product rows to a discharge belt (6) running transversely to the main conveying direction for supplying (6) to a packaging machine, the main belt being a discharge switch having a vertically pivotable discharge-side belt nose (4), having a waiting belt unit (2) that is arranged next to the discharge belt below the main belt and comprises a waiting belt (8), which is displaceable by means of a displacement device (9) for horizontal displacement as a whole in or counter to the main conveying direction, for taking product rows from the main belt and transferring the product rows to the discharge belt (6) at a different time from the main belt, **characterized in that** the waiting belt unit (2) having the waiting belt (8) and the discharge belt (6) is retractable transversely to the main conveying direction and counter to the conveying direction of the discharge belt.

2. The product discharge unit according to claim 1, **characterized in that** the waiting belt (8) is provided with a flat discharge-side belt nose, with a length corresponding to at least half the width of the discharge belt (6), a thickness of preferably approximately 30 mm and an end deflection diameter of preferably 10-14 mm and a maximum of 25 mm.

3. The product discharge unit according to either claim 1 or claim 2, **characterized by** means for additional height adjustment of the waiting belt.

4. The product discharge unit according to any of claims 1-3, **characterized by** means for positioning the discharge-side belt nose of the waiting belt (8) above the discharge belt as desired.

5. The product discharge unit according to any of claims 1-4, **characterized by** means for aligning a product row (1) applied to the discharge belt (6) using the displaceable flat belt nose of the waiting belt.

6. The product discharge unit according to any of claims 1-5, **characterized by** means for retracting the waiting belt counter to the main conveying direction during the loading process.

7. The product discharge unit according to any of claims 1-6, **characterized in that** the direction of travel of the displaceable waiting belt (8) is reversible, and therefore said belt can pick up rows of products supplied counter to the main conveying direction in the opposite direction.

8. A product discharge method for taking product rows from a production flow conveyed on a main belt (3) and for supplying to a packaging machine by means of a product discharge unit according to any of the preceding claims, **characterized in that** different types of loading are generated by coordinating the belt movement of the waiting belt and the horizontal displacement of the waiting belt.

9. The product discharge method according to claim 8, **characterized in that** two types of loading overlap, i.e. are combined, using a displaceable waiting belt.

10. The product discharge method according to claim 8, **characterized in that** a direct refeed operation with two diverting belts arranged opposite one another can be generated in combination with indirect loading of the packaging machine.

## Revendications

1. Unité de distribution de produits destinée à la prise en charge des rangées de produits (1) d'un flux de produits acheminés sur une bande principale (3) dans un sens principal de marche et au transfert des rangées de produits sur une bande de distribution (6) s'étendant transversalement au sens principal de marche pour l'acheminement (6) vers une machine à emballer, dans laquelle la bande principale comporte un commutateur de distribution doté d'un nez de bande (4) sur le côté sortie pouvant pivoter verticalement, comportant une unité de bande en attente (2) disposée à côté de la bande de distribution en dessous de la bande principale, comportant une bande en attente (8) pouvant être déplacée dans son ensemble dans le sens principal de transport ou à l'opposé de celui-ci au moyen d'un dispositif de déplacement (9) destiné au déplacement horizontal, pour la prise en charge des rangées de produits de la bande principale et le transfert temporellement désaccouplé de la bande principale des rangées de produits sur la bande de distribution (6), **caractérisée en ce que** l'unité de bande en attente (2) comportant la bande en attente (8) et la bande de distribution (6) peut être retirée transversalement au sens principal de marche et à l'opposé du sens de marche de la bande de distribution.

2. Unité de distribution de produits selon la revendication 1, **caractérisée en ce que** la bande en attente (8) est pourvue d'un nez plat de bande de distribution sur le côté sortie, d'une longueur correspondant au moins à la moitié de la largeur de la bande de distribution (6), d'une épaisseur de préférence d'environ 30 mm et d'un diamètre de déviation d'extrémité de préférence de 10 à 14 mm et au maximum de 25 mm.

3. Unité de distribution de produits selon l'une des revendications 1 à 2, **caractérisée par** des moyens permettant un réglage supplémentaire de la hauteur de la bande en attente.

4. Unité de distribution de produits selon l'une des revendications 1 à 3, **caractérisée par** des moyens permettant de positionner arbitrairement le nez de la bande en attente (8) au-dessus de la bande de distribution.

5. Unité de distribution de produits selon l'une des revendications 1 à 4, **caractérisée par** des moyens pour aligner une rangée de produits (1) appliqués sur la bande de distribution (6) avec le nez de bande plat et déplaçable de la bande en attente.

6. Unité de distribution de produits selon l'une des revendications 1 à 5, **caractérisée par** des moyens pour rétracter la bande en attente à l'opposé du sens principal de marche pendant le processus d'alimentation.

7. Unité de distribution de produits selon l'une des revendications 1 à 6, **caractérisée en ce que** le sens de déplacement de la bande en attente (8) déplaçable est réversible, de sorte que ladite bande en attente déplaçable puisse recevoir des rangées de produits acheminés dans le sens opposé au sens principal de marche.

8. Procédé de distribution de produits destiné à la prise en charge des rangées de produits d'un flux de produits acheminés sur une bande principale (3) et à l'acheminement vers une machine à emballer au moyen d'une unité de distribution de produits selon l'une des revendications précédentes, **caractérisé en ce que** différents types d'alimentation sont générés par la coordination du parcours de la bande en attente et du déplacement horizontal de la bande en attente.

9. Procédé de distribution de produits selon la revendication 8, **caractérisé en ce que** deux types d'alimentation sont superposés, c'est-à-dire combinés, au moyen d'une bande en attente déplaçable.

10. Procédé de distribution de produits selon la revendication 8, **caractérisé en ce qu'**une opération de réalimentation directe à l'aide de deux bandes de commutation disposées l'une contre l'autre peut être générée en combinaison avec une alimentation indirecte de la machine à emballer.
